# EUROPEAN PATENT APPLICATION

(11) **EP 2 580 964 A1**
(43) Date of publication of application: **17.04.2013**
(21) Application number: 12188293.0
(22) Date of filing: 12.10.2012
(51) Int. Cl.: A23K 1/175, A23K 1/18

(54) **Method for preventing osteochondrosis**

(30) Priority: 12.10.2011 US 201161546154 P; 12.10.2011 NL 2007581
(71) Applicant: Nutreco Nederland B.V., 5831 JN Boxmeer (NL)
(72) Inventor: Hinnen, Vincent Mattheus Rudolf, 7323 KB Apeldoorn (NL)
(74) Representative: Kingma, Roelofke Leentje

(57) **Abstract**

Disclosed is an animal feed or supplement or combination of two or more thereof that is particularly suitable for preventing and/or treating osteochondrosis and/or osteochondritis dissecans in young and growing animals, such as foals. The invention is further directed to medical uses of said animal feed or supplement or combination of two or more thereof, in particular for preventing and/or treating osteochondrosis and/or osteochondritis dissecans.

## Description

### Field of the invention

The present invention is in the field of animal feed, preferably for young animals, more particular in the field of horse feed, preferably, foal feed.

### Background of the invention

Osteochondrosis is a disease which affects the cartilage of growing horses, and is a major cause of lameness among horses. As one of the most commonly occurring developmental orthopedic diseases, it is a major source of economic loss in the industry.

When bones grow, an ossification (or hardening) of cartilage is involved. When there is an interruption or disturbance of this process in any way (e.g., mineral imbalance, genetics), a flap of cartilage develops from either the articular cartilage or the growth plate. The clinical manifestation of the disorder is called osteochondrosis. Osteochondrosis can, for example, be diagnosed upon visualisation of the interruption or disturbance of the ossification process, e.g. by X-ray photography or arthroscopy. In the places where the cartilage fails to develop to bone, pockets or lesions of cartilage are left and because the cartilage is softer than bone, these spots become weak. These weak spots can be responsible for the onslaught of the disease OCD (osteochondritis dissecans) which can negatively affect a horse's performance, and in some cases, be a debilitating factor for the rest of the horse's working life. Osteochondritis dissecans is typically diagnosed when a cartilage flap starts to separate from the bone.

Nutrition appears to have an important role in prevention of osteochondrosis when genetics and movement are not to blame. Foals are often encouraged to grow quickly for shows and sales which puts them at high risk if the vitamin and mineral balances they ingest are not managed properly. If excess energy is fed without the extra nutrients, the foal gains weight before the skeleton is strong enough to support it. Nutrients such as calcium and phosphorous are known to be important for healthy bones, and deficiencies and imbalances may lead to weak and fragile bones.

Osteochondrosis usually affects primarily young and growing horses (4 -18 months) from mineral imbalances to genetics. Occasionally it occurs in more mature horses (18 months +) as result of biomechanical trauma, as is the result when it produces noticeable signs once the horse begins training. The new workload is usually what creates enough trauma to wear the excess cartilage around the joints.

The signs of osteochondrosis can be difficult to characterize because of the wide range of lesions and sites involved. Not all lesions of osteochondrosis progress to osteochondrosis or cause clinical signs, but evidence of mild stiffness or lameness may occur. If there was superimposed trauma to the cartilage (biomechanical trauma) the joint damage progresses to loss of performance or pain and lameness.

When osteochondrosis of the limbs is present, non-painful swelling (from the pressure of the cartilage flap within) usually occurs. Foals suffering from the disease often spend more time lying down and have difficulty keeping up with the rest of the herd. Stiffness is also a common sign of osteochondrosis which may be accompanied by an upright conformation in the affected limbs (particularly in the fetlocks of growing foals).

Osteochondrosis is also reported in young growing cattle, such as pigs, cows and sheep, and in humans, primarily afflicting adolescents.

There is a need in the art for improved methods for the prevention and treatment of osteochondrosis (OC) and/or osteochondritis dissecans (OCD). Such improved methods would be of great economic value, and would reduce animal suffering and alleviate painful joint discomfort and loss of function and mobility in such animals.

### Summary of the invention

In a first aspect, the present invention relates to an animal feed or (animal feed) supplement, or a combination of two or more (e.g., at least two) of an animal feed or supplement, said animal feed or supplement or said combination comprising the minerals calcium, magnesium and phosphor, wherein the weight ratio of calcium over magnesium is 1.5 or below, as well as such feed or feed supplement for use as a medicament.

In a second aspect, the present invention pertains to an animal feed or (animal feed) supplement, or a combination of two or more of an animal feed or supplement, said animal feed or supplement or said combination comprising the minerals calcium, magnesium and phosphor, wherein the weight ratio of calcium over magnesium is 3 or below, for use in reducing the incidence and extent of osteochondrosis and/or osteochondritis dissecans.

In an embodiment, the animal feed or animal feed supplement, or a combination of two or more of an animal feed or supplement is a horse feed or feed supplement, preferably a foal feed or feed supplement, more preferably feed or feed supplement for a foal of up to 12 months of age, or a combination of two or more thereof.

Said animal feed or supplement, or combination of two or more of an animal feed or supplement may be in the form of a solid feed or supplement, a liquid feed or supplement, a paste feed or supplement, or a mineral lick feed or supplement. Preferably it is for daily administration to said animal. It may be provided in two or more separate dosage forms.

Said animal feed or supplement, or combination of two or more of an animal feed or supplement may comprise at least 0.4% by weight Ca.

In a final aspect, the present invention provides for a method for feeding an animal, said method comprising the step of providing said animal with an animal feed or supplement, or a combination of two or more of an animal feed or supplement of the invention.

### Detailed description of the invention

The present inventor has found that increased amounts of magnesium in the daily diet of foals, which can be achieved by lowering the calcium (Ca) over magnesium (Mg) (weight) ratio to 3 or below 3, such as below 1.5, reduces the incidence of osteochondrosis in young animals, in particular in foals. Also, it gives an increased chance to reduction of osteochondrosis occurrence after onset thereof.

### Animal feed or animal supplement or combination of two or more thereof

The present invention thus relates to an animal feed or feed supplement comprising calcium, magnesium and phosphor, wherein said calcium and magnesium are present in a ratio of 1.5 or below. Said ratio is preferably a weight ratio.

The term "animal feed or supplement" means any compound, preparation, mixture, or composition suitable for, or intended for intake by an animal. It also includes premixes and base mixes that can be mixed to an animal feed as explained below.

The term "animal feed" is herein understood to include liquids for animal consumption, i.e. a drink or beverage. The animal feed may be a solid, semi-solid (such as a paste) and/or liquid feed composition. A variety of methods are known in the art for the production of animal feeds. These various methods may be adapted in a routine manner to alter the weight ratio of calcium (Ca) over magnesium (Mg) in accordance with the present invention. Such feed compositions may be prepared in a manner known per se, e.g. by adding additional Mg to a suitable feed base, in a suitable amount. Alternatively, the animal feed may be in the form of base mixes or premixes. Such base mixes or premixes are typically added at an amount to constitute 0.5% to 30% by weight of the final animal feed composition. As discussed below, the term "animal" encompasses humans. Thus, the term "animal feed" as used herein also encompasses human feed, more commonly referred to as "a food composition". Thus, the term "feed" as used in the context of the present invention also encompasses "food".

The term "supplement" or "feed supplement" (the terminology is used interchangeably in this specification) refers to a composition ingested by animals in addition to the normal daily feed intake. It can be provided as dietary supplement that can be directly hand-fed or "top-dressed" onto an animal feed. As discussed below, the term "animal" encompasses humans. Thus, the term "supplement" or "feed supplement" or "animal feed supplement" as used herein also encompasses a supplement for humans, also known as "food supplement". Generally, feed supplements are in the form of liquids, pastes, tablets, powders, pellets, bars, pills, etc. A supplement could be in a formulation that contains other nutrients, excipients, or flavors. "Feed ingredient" or "feed supplement ingredient" refers to a product which is suitable for being added to a final feed product, or feed supplement, or during the production process of a feed product, or feed supplement. A feed supplement could be placed on top of or mixed in the animal's feed. Alternatively, it could be fed to the animal on its own.

A conventional animal feed or feed supplement can be used as a starting material for the animal feed of the present invention. The basis of such feed is mainly determined by the type of animal to be fed and common feed ingredient considerations such as price and availability. For example, for foals, conventional feeds include, without limitation, Pavo Podo Grow, Pavo Podo Start, Subli® Fok en Opfokmix, OptiGrow Foal Cubes (Havens), and the like. Commonly available feed supplements for horses include, without limitation, H-Licks salt licks (Havens), Pavo supplements (as indicated on the Pavo website www.pavo.nl), and the like.

The animal feed or feed supplement of the present invention may be further supplemented by other components, such as vitamins, other minerals, trace elements and amino acids.

Vitamins that may be added to an animal feed or (feed) supplement include, without limitation, vitamin A, vitamin B1, vitamin B2, vitamin B6, vitamin B12, vitamin K3, vitamin D, and vitamin E.

Other minerals that may be added to an animal feed or (feed) supplement include, without limitation, sodium (Na), potassium (K), and chloride (Cl).

Trace elements that may be added to an animal feed or (feed) supplement include, without limitation, iron (Fe), copper (Cu), Zinc (Zn), Manganese (Mn), Cobalt (Co), Selenium (Se), and Iodine (I).

Amino acids that may be added to an animal feed or (feed) supplement include, without limitation, lysine, tryptophan, threonine, methionine, cysteine, and the like.

In an embodiment, the animal feed further comprises a carbohydrate source, and a protein source. The carbohydrate source may be any known carbohydrate source. For example, in feed compositions for young horses, such as Pavo Podo® Start or Pavo Podo® Grow, barley, soy beans, soy hulls, wheat, wheat feed, linseed, cane molasses, lactose, and the like may be employed.

The term animal includes all animals, including human beings. Examples of animals are non-ruminants, and ruminants. Non-ruminant animals include mono-gastric animals, e.g. equine species such as horses, ponies, mules, and the like, pigs or swines (including, but not limited to, piglets, growing pigs, and sows); poultry such as turkeys, ducks and chickens (including but not limited to broiler chicks, layers). Ruminant animals include, for example, animals such as sheep, goat, and cattle, e.g. cow such as beef cattle and dairy cows. In a particular embodiment, the animal is a non-ruminant animal. In an embodiment, the present invention relates to a non-human animal, preferably a mono-gastric animal, more preferably an equine species, most preferably selected from the group consisting of horses, ponies, and mules. In a suitable embodiment, the animal is a foal from weaning age to an age of about 8 months, 10 months, 1 year, or 1.5 years.

The weight ratio of calcium over magnesium is preferably about 1.5, 1.4, 1.3, 1.2, 1.1, 1, 0.9, 0.8, 0.7, 0.6, 0.5, 0.4, or below.

The calcium and magnesium (as well as other minerals and trace elements) may be provided in any form, but preferably in the form of an oxide or salt. In a preferred embodiment, the magnesium is provided in the form of magnesium phosphate and/or magnesium acetate.

The animal feed or supplement, or the combination of two or more thereof is advantageously a horse feed or supplement, or combination thereof. Even more preferably, it is a foal feed or supplement, or combination of two or more thereof. Preferably, it is intended for a foal of up to 12 months of age.

Said animal feed or supplement is preferably in the form of a solid feed or supplement, a liquid feed or supplement, a paste feed or supplement, or a mineral lick feed or supplement. A combination of two or more of these may be used. For example, a solid animal feed may be combined with any supplement, such as a liquid supplement, paste supplement, or mineral lick supplement, as long as the combination of the solid animal feed together with said supplement results in a Ca over Mg weight ratio fed to the animal of 1.5, 1.4, 1.3, 1.2, 1.1, 1.0, 0.9, 0.8, 0.7, 0.6, 0.5, 0.4, or below. Alternatively, a single complete feed in any of the above-mentioned form may be administered to said animal, comprising calcium and magnesium, wherein the weight ratio of calcium over magnesium is about 1.5, 1.4, 1.3, 1.2, 1.1, 1.0, 0.9, 0.8, 0.7, 0.6, 0.5, 0.4, or below, i.e., the weight ratio of calcium over magnesium is at most about 1.5, 1.4, 1.3, 1.2, 1.1, 1.0, 0.9, 0.8, 0.7, 0.6, 0.5, 0.4, or below.

In case the calcium and magnesium is added in the form of a concentrated preparation, e.g., a supplement, such as in the form of a paste or liquid, the calcium over magnesium ratio may be considerably lower than about 1.5, such as about 1.0, 0.9, 0.8, 0.7, 0.6, 0.5, 0.4, or below. Such supplement may be added to the animal's diet in amounts such as in the range of about 10 to about 200 cc, such as about 15 to about 150 cc, such as about 20 to about 100 cc, such as about 25 to about 90 cc, such as about 30 to about 75 cc, such as about 35 to about 55 cc.

Said animal feed, supplement, or combination may be intended for daily administration to said animal, and may be provided in two or more separate dosage forms, as explained above, as long as said two or more separate dosage forms jointly provide the Ca overMg ratio of 1.5 or below. Thus, the amount of Ca is at maximum 1.5 times higher than the amount of Mg provided.

In an embodiment, the amount of Ca per kg of animal feed or combination of animal feeds or animal feed plus supplement is in the range of 1-50 g per kg, such as 2-40 g/kg, 3-30 g/kg, 4-20 g/kg, 5-15 g/kg animal feed or combination of two or more of animal feeds or animal feed plus supplement.

In another embodiment, the amount of Mg per kg of animal feed or combination of animal feeds or animal feed plus supplement is in the range of 0.35-50 g per kg, such as 1-40 g/kg, 2-30 g/kg, 4-20 g/kg, 5-15 g/kg animal feed or combination of two or more of animal feeds or animal feed plus supplement.

In an embodiment, the animal feed, supplement, and/or combination of two or more thereof comprises at most 50, 40, 30, 20, 15, 10, or 4 g Ca/kg feed. In another embodiment, the animal feed, supplement, and/or combination of two or more thereof comprises at least 4, 10, 15, 20, 30, 40, 50 g Mg/kg feed. The animal feed, supplement, and/or combination of two or more thereof may be administered in appropriate amounts depending on its body weight. For example, once it is no longer nursing, a weaned foal may be eating approximately 2.5% of its body weight in feed and forage a day. Weight gain and development taper off as the foal matures. As growth slows, the ratio may be adjusted to approximately 1.5-2% of the foal's body weight. Breed type, maturity and level of activity will affect the horse's exact nutritional requirements.

### Animal feed or animal supplement or combination of two or more thereof for preventing and/or treating OC and/or OCD

In an aspect, the present invention relates to an animal feed or supplement or a combination of two or more of an animal feed and/or supplement, said animal feed or supplement or combination comprising the minerals calcium, magnesium and phosphor, wherein the weight ratio of calcium over magnesium is 3 or below, for use in reducing the incidence and extent of osteochondrosis and/or osteochondritis dissecans, or preventing or treating osteochondrosis (OC) and/or osteochondritis dissecans (OCD). For example, the animal feed or supplement therefor is administered to an animal and reduction of the incidence and extent of osteochondrosis and/or osteochondritis dissecans can be observed in comparison to a control animal not receiving the animal feed or supplement.

The invention further pertains to a method for preventing and/or treating osteochondrosis and/or osteochondritis dissecans in a subject in need thereof, said method comprising the step of administering to said subject a therapeutically effective amount of an animal feed or supplement or a combination of two or more of an animal feed and/or supplement, said animal feed or supplement or combination comprising the minerals calcium, magnesium and phosphor, wherein the weight ratio of calcium over magnesium is 3 or below.

Said subject may be any animal as explained above.

The animal feed or supplement is as defined above. The weight ratio of the mineral calcium over the mineral magnesium may be 3 or below, preferably 2.5, 2.0, 1.9, 1.8, 1.7, 1.6, 1.5, 1.4, 1.3, 1.2, 1.1, 1.0, 0.9, 0.8, 0.7, 0.6, 0.5, 0.4 or below.

The term "prevention" shall be understood to include complete prevention, prophylaxis, as well as statistically significantly decreasing the individual's risk of developing osteochondrosis and/or osteochondritis dissecans. The term shall also be understood to include alleviation of any of the symptoms associated with osteochondrosis and/or osteochondritis dissecans already developed.

The term "treatment" or "treating" is understood to include the management and care of a patient for the purpose of combating the osteochondrosis and/or osteochondritis dissecans. The term "treating" is also herein synonymous of "delaying" the development of any of the symptoms associated with osteochondrosis and/or osteochondritis dissecans, and reducing severity of any of the symptoms associated with osteochondrosis and/or osteochondritis dissecans.

As used herein, the term "therapeutically effective amount" refers to a quantity sufficient to achieve a desired therapeutic and/or prophylactic effect, e.g., an amount which results in the treatment, prevention of, or prevention of progression of, osteochondrosis and/or osteochondritis dissecans. *In casu*, the therapeutically effective amount may be the amount of feed/supplement/combination administered to provide the Ca over Mg weight ratio of 3.0 or below and meet the further nutritional requirements for growth of said animal. The skilled person will be capable of determining when such disease or condition has been treated, prevented, or when its progression has been prevented. For example, disease occurrence and progression may be determined using X-ray photography and evaluation thereof as set forth in the examples below.

The subject may be any animal, including a human being. Examples of animals are non-ruminants, and ruminants. Non-ruminant animals include mono-gastric animals, e.g. equine species such as horses, ponies, mules, and the like, pigs or swines (including, but not limited to, piglets, growing pigs, and sows); poultry such as turkeys, ducks and chickens (including but not limited to broiler chicks, layers). Ruminant animals include, for example, animals such as sheep, goat, and cattle, e.g. cow such as beef cattle and dairy cows. In a particular embodiment, the animal is a non-ruminant animal. In an embodiment, the subject is a non-human animal, preferably a mono-gastric animal, more preferably an equine species, most preferably selected from the group consisting of horses, ponies, and mules. In a suitable embodiment, the animal is a foal from weaning to an age of about 8 months, 10 months, 1 year, or 1.5 years.

In a final aspect, the present invention provides for a method for feeding an animal, said method comprising the step of providing said animal with an animal feed or supplement, or a combination of two or more of an animal feed or supplement of the invention. The skilled person is aware of suitable feedings methods.

In this document and in its claims, the verb "to comprise" and its conjugations is used in its non-limiting sense to mean that items following the word are included, but items not specifically mentioned are not excluded. In addition the verb "to consist" may be replaced by "to consist essentially of" meaning that a composition (animal feed, supplement, and the like) as defined herein may comprise additional component(s) than the ones specifically identified, said additional component(s) not altering the unique characteristic of the invention.

In addition, reference to an element by the indefinite article "a" or "an" does not exclude the possibility that more than one of the elements is present, unless the context clearly requires that there be one and only one of the elements. The indefinite article "a" or "an" thus usually means "at least one".

The word " approximately" or " about" when used in combination with a numerical value preferably means that said value +/- 10% of said value is encompassed by the present invention.

The term "ratio" is used in the context of the present invention as a weight ratio. Thus, a calcium over magnesium weight ratio of 3 is obtained when the amount of calcium (in weight such as g, mg, or kg) in a composition or combination of two or more compositions is three times higher than the amount of magnesium (in weight such as g, mg, or kg). Often, both the calcium and magnesium in a composition will be indicated using a weight percentage based on the weight of the total composition.

The following examples are offered for illustrative purposes only, and are not intended to limit the scope of the present invention in any way.

### Examples

### Example 1. Effect of Mg supplementation on osteochondrosis incidence of foals

63 mares en 63 foals divided over 5 yards were selected. 31 foals received a placebo supplement, whereas 32 foals received a Mg supplement to their conventional feed regime. In total, the foals receiving a placebo supplement were fed a weight ratio of Ca over Mg of 3.5 daily, whereas the foals receiving a Mg supplement were fed a weight ratio of Ca over Mg of 0.38 daily. All other feed ingredients were the same between the control and test group.

OC and/or OCD incidence were determined using X-ray images of foals at the end of the test (at the age of 5 months). 8 images were taken per foal: 2x knee joint, 2x hock joint and 4x fetlock joint. Prior to taking the images the foals were sedated using betomdine and buthorfenol. All images were evaluated in conformance with the standard evaluation for OC in the Netherlands. The scores assigned have the following meaning:
A=no defect
B=slight defect
C=average defect
D=strong defect
E=serious defect

An evaluation of foals having one or more C's, D's or E's leads to a diagnosis of OC. Table 1 shows the effect of Mg supplementation on OC incidence.

**Table 1. The influence of supplement on osteochondrosis incidence per company at the end of the test**

| Supplement | | | |
|---|---|---|---|
| Placebo | | magnesium | |
| Number of foals | Osteochondrosis incidence | Number of foals | Osteocondrosis incidence |
| 31 | 41.9 | 32 | 21.9 |

Thus, supplementation of Mg reduces OC incidence of foals at the age of 5 months.

### Example 2. Effect of Mg supplementation on osteochondrosis of foals 5-12 months in age Yards

Six yards were selected for this test. A short description of the companies and foals is provided in Table 2.

**Table 2. Companies and details on foals at the start of the test**

| Yard | Number of foals | Average age (month) | Average height (cm) |
|---|---|---|---|
| 1 | 12 | 4.95 | 135.6 |
| 2 | 4 | 5.22 | 132.5 |
| 3 | 18 | 6.09 | 143.6 |
| 4 | 8 | 5.78 | 140.4 |
| 5 | 6 | 4.89 | 136.7 |
| 6 | 6 | 5.64 | 139.5 |

### Animals

The test was started with 54 foals. Two foals died of a cause unrelated to this test or osteochondrosis.

The foals participating in the test were visited once a month and each week the company was contacted to ensure administration of the supplement, and to denote details regarding the test animals.

### Treatment

The animals were randomly divided into 2 groups: one receiving no supplement (control Group) and one receiving a Mg supplement (on average 4.5 grams Mg per animal per day). In total, the foals receiving a placebo supplement were fed a weight ratio of Ca over Mg of 3.5 daily, whereas the foals receiving a Mg supplement were fed a weight ratio of Ca over Mg of 0.38 daily. All other feed ingredients were the same between the control and test group.

### Analyses

For osteochondrosis diagnostic purposes X-ray images of foals were taken at two time points: at the start of the test (at an age of about 5 months) and at the end of the test (at an age of about 12 months). In total 14 images were made: 2 times 2x knee joint, 2 times 3x hock joint, and 4 times 1 x fetlock joint. Prior to taking the images the foals were sedated using betomdine and buthorfenol.

All images were evaluated in conformance with the standard evaluation for OC in the Netherlands. The scores assigned have the following meaning: A: no defect, E = most serious defect. The number indicates the location of the defect:

| Hock joint | Knee joint | Fetlock joint |
|---|---|---|
| 1 Sagittal ridge | 1 Laterale trochlear ridge | 1 Sagittal ridge |
| 2 Lateral trochlear ridge | 2 Mediale trochlear ridge | 2 Other |
| 3 Medial trochlear ridge | 3 Sulcus | |
| 4 Lateral malleolus | 4 Patella | |
| 5 Medial malleolus | 5 Other | |
| 6 Basis Talus | | |
| 7 Other | | |

For diagnostic purposes, evaluation of A and B were indicative of the absence of OCD and C or higher was indicative of OCD. For the final evaluation, in addition to the total score for OCD, also the score per joint has been taken account of.

### Calculations/statistics

All calculations were done with Stata/SE 11.2.

### Results

At the start of the test osteochondrosis incidence of foals assigned to the control group was 41.4% compared to 56% of foals assigned to the test group. At the end, when the foals had reached an age of 12 months, the OC incidence in the control group had increased to 44.8% whereas the OC incidence in the test Group had decreased to 44.0%.

When foals are divided into a group of foals that improve (suffering from OC at 5 months of age, no OC at 12 months of age) compared to animals not demonstrating an effect or worsening (no OC at 5 months of age, OC at 12 months of age), a significant difference can be observed between foals receiving Mg supplementation compared to animals not receiving Mg supplementation. The chance of an improvement of OC incidence increased by a factor 4.6 with Mg supplementation. Interestingly, no more defects of the knee joint were observed in the test group receiving Mg supplementation.

## Claims

1. An animal feed or supplement, or a combination of two or more of an animal feed or supplement, said animal feed or supplement or said combination comprising the minerals calcium, magnesium and phosphor, wherein the weight ratio of calcium over magnesium is 1.5 or below.

2. An animal feed or supplement, or a combination of two or more of an animal feed or supplement, said animal feed or supplement or said combination comprising the minerals calcium, magnesium and phosphor, wherein the weight ratio of calcium over magnesium is 3 or below, for use in reducing the incidence and extent of osteochondrosis and/or osteochondritis dissecans.

3. An animal feed or supplement, or a combination of two or more of an animal feed or supplement, said animal feed or supplement or said combination comprising calcium, magnesium and phosphor, wherein the weight ratio of calcium over magnesium is 1.5 or below, for use as a medicament.

4. An animal feed or supplement, or a combination of two or more of an animal feed or supplement according to claim 1, which is a horse feed or supplement, or a combination thereof.

5. An animal feed or supplement, or a combination of two or more of an animal feed or supplement according to claim 4, which is a foal feed or supplement, or a combination thereof.

6. An animal feed or supplement, or a combination of two or more of an animal feed or supplement according to claim 5, which is for a foal of up to 12 months of age.

7. An animal feed or supplement, or a combination of two or more of an animal feed or supplement according to any one of claims 1 or 4-6, which is in the form of a solid feed or supplement, a liquid feed or supplement, a paste feed or supplement, or a mineral lick feed or supplement, or a combination of two or more thereof.

8. An animal feed or supplement, or a combination of two or more of an animal feed or supplement according to any one of claims 1 or 4-7, which is for daily administration to said animal.

9. An animal feed or supplement, or a combination of two or more of an animal feed or supplement according to any one of claims 1 or 4-8, which may be provided in two or more separate dosage forms.

10. An animal feed or supplement, or a combination of two or more of an animal feed or supplement according to any one of claims 1 or 4-9, which comprises at least 0.4% by weight Ca.

11. A method for feeding an animal, said method comprising the step of providing said animal with an animal feed or supplement, or a combination of two or more of an animal feed or supplement according to any one of claims 1 or 4-10.
